# EUROPÄISCHE PATENTSCHRIFT

(11) **EP 0 741 759 B1**
(45) Veröffentlichungstag und Bekanntmachung des Hinweises auf die Patenterteilung: **15.10.1997**
(21) Anmeldenummer: 95906351.2
(22) Anmeldetag: 26.01.1995
(51) Int. Cl.: C08K 5/54, C08F 230/08

(54) **REDISPERGIERBARE, SILICIUMMODIFIZIERTE DISPERSIONSPULVERZUSAMMENSETZUNG, VERFAHREN ZU DEREN HERSTELLUNG UND DEREN VERWENDUNG**
REDISPERSIBLE SILICON-MODIFIED DISPERSION POWDER COMPOSITION, METHOD OF MANUFACTURING IT AND ITS USE
COMPOSITION PULVERULENTE EN DISPERSION, MODIFIEE AU SILICIUM, POUVANT ETRE REDISPERSEE, SON PROCEDE DE FABRICATION ET D'UTILISATION

(30) Priorität: 27.01.1994 DE 4402408
(43) Veröffentlichungstag der Anmeldung: 13.11.1996
(73) Patentinhaber: Wacker-Chemie GmbH, 81737 München (DE)
(72) Erfinder: ECK, Herbert, D-84489 Burghausen (DE); HOPF, Heinrich, D-84489 Burghausen (DE); ADLER, Klaus, D-84489 Burghausen (DE); JODLBAUER, Franz, D-84533 Marktl (DE); VON AU, Günter, D-84489 Burghausen (DE)
(74) Vertreter: Schuderer, Michael
(86) Internationale Anmeldenummer: EP9500281
(87) Internationale Veröffentlichungsnummer: WO9520626

(56) Entgegenhaltungen:
- EP-A- 0 493 168
- GB-A- 1 161 072
- US-A- 3 203 919
- R. Gächter, H. Müller (Hsg.), Taschenbuch der Kunststoff-Additive, 2. Ausgabe, 1983, Carl Hanser Verlag, München Wien, S. 747

## Beschreibung

Die Erfindung betrifft eine in Wasser redispergierbare, siliciummodifizierte Dispersionspulverzusammensetzung auf der Basis von wasserunlöslichen Polymeren, Verfahren zu deren Herstellung und deren Verwendung.

In Wasser redispergierbare Dispersionspulverzusammensetzungen auf der Basis von Homo- oder Copolymerisaten von ethylenisch ungesättigten Monomeren sind bekannt. Die Herstellung derartiger Dispersionspulverzusammensetzung erfolgt durch Sprühtrocknung der entsprechenden wäßrigen Kunststoffdispersionen in einem heißen Luftstrom. Die Dispersionspulver eignen sich als Zusatzstoffe für hydraulische Bindemittel in der Baustoffindustrie, weiter werden derartige Produkte als Binder in Beschichtungsmitteln oder Klebemitteln eingesetzt.

Die EP-A 228657 (US-A 4704416) beschreibt in Wasser redispergierbare Dispersionspulver auf der Basis von wasserlöslichen Polymeren, welche organische Siliciumverbindungen, vorzugsweise Organopolysiloxane, enthalten. Die Dispersionspulver werden durch Sprühtrocknung einer Emulsion der organischen Siliciumverbindung, in einer wäßrigen Lösung des wasserlöslichen Polymers hergestellt.

Gegenstand der EP-B 279373 sind in Wasser redispergierbare Organopolysiloxan enthaltende Pulver, welche zusätzlich wasserlösliches, filmbildendes Polymer enthalten. Die Herstellung erfolgt durch Sprühtrocknung der wäßrigen Gemische der genannten Bestandteile.

Die EP-A 493168 betrifft in Wasser redispergierbare Dispersionspulver auf der Basis von filmbildenden, wasserunlöslichen Vinyl- oder Acrylpolymerisaten, welche Silicone, genauer Organosilikonate und/oder organopolysiloxane, enthalten. Die Herstellung erfolgt durch Sprühtrocknung von wäßrigen Dispersionen der Vinyl- oder Acrylpolymerisate, denen vor dem Versprühen Silicone zugesetzt wurden. Bei dieser Verfahrensweise liegen vor der Sprühtrocknung die Silicone in Emulsion und die wasserunlöslichen Polymere in Dispersion vor, sodaß nach der Sprühtrocknung bzw. der Redispergierung Produkte erhalten werden, in denen die Komponenten in getrennten Teilchen vorliegen.

Der Erfindung lag die Aufgabe zugrunde, in Wasser redispergierbare Dispersionspulverzusammensetzungen auf der Basis von wasserunlöslichen Polymeren zur Verfügung zu stellen, welche mit Organosiliciumverbindungen in der Weise modifiziert sind, daß beide Komponenten in den Pulverteilchen und in den redispergierten Teilchen gemeinsam vorliegen und gegebenenfalls über chemische Bindungen aneinander gebunden sind.

Die Erfindung betrifft eine in Wasser redispergierbare Dispersionspulverzusammensetzung auf der Basis von wasserunlöslichen Homo- oder Copolymerisaten von vorzugsweise ethylenisch ungesättigten Monomeren und einer oder mehrerer Organosiliciumverbindungen sowie gegebenenfalls weiterer Zusatzstoffe wie Schutzkolloide und Antiblockmittel, erhältlich durch
a) Polymerisation von einem oder mehreren Monomeren in Gegenwart von 0.1 bis 30 Gew%, bezogen auf das Gesamtgewicht der Monomeren, einer oder mehrerer, in Wasser dispergierbarer Organosiliciumverbindungen mit einem Siedepunkt bei Normaldruck von > 160°C aus der Gruppe der Silane, Polysilane, Oligosiloxane, Polysiloxane, Carbosilane, Polycarbosilane, Carbosiloxane, Polycarbosiloxane, Polysilylendisiloxane und
b) Sprühtrocknung des so erhaltenen Produkts, gegebenenfalls vor oder nach Zugabe der genannten Zusatzstoffe.

Als wasserunlösliche Polymere bevorzugt sind:
Vinylester-Homo- oder -Copolymerisate enthaltend eine oder mehrere Monomereinheiten aus der Gruppe der Vinylester von unverzweigten oder verzweigten Alkylcarbonsäuren mit 1 bis 15 C-Atomen;
(Meth)acrylsäureester-Homo- oder -Copolymerisate enthaltend eine oder mehrere Monomereinheiten aus der Gruppe der Methacrylsäureester und Acrylsaureester von unverzweigten oder verzweigten Alkoholen mit 1 bis 12 C-Atomen;
Homo- oder Copolymerisate von Fumar- und/oder Maleinsäuremono- oder -diester von unverzweigten oder verzweigten Alkoholen mit 1 bis 12 C-Atomen;
Homo- oder Copolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert werden können;
Homo- oder Copolymerisate von Vinylaromaten wie Styrol, Methylstyrol, Vinyltoluol;
Homo- oder Copolymerisate von Vinylhalogenverbindungen wie Vinylchlorid.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit bis zu 10 C-Atomen, beispielsweise VeoVa9^{R} oder Veova10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl-, und Dodecyl-Gruppe.

Die Vinylester-copolymerisate können gegebenenfalls 1.0 bis 65 Gew%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder Acrylsäureester bzw. Methacrylsäureester von Alkoholen mit 1 bis 10 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder ethylenisch ungesättigte Dicarbonsäureester bzw. deren Derivate wie Diisopropylfumarat, die Dimethyl-, Methyl-t-butyl-, Di-n-butyl-, Di-t-butyl- und Diethylester der Maleinsäure bzw. Fumarsäure, oder Maleinsäureanhydrid enthalten.

Die (Meth)acrylsäureester-Copolymerisate können gegebenenfalls 1.0 bis 65 Gew%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder ethylenisch ungesättigte Dicarbonsäureester bzw. deren Derivate wie Diisopropylfumarat, die Dimethyl-, Methyl-butyl-, Dibutyl- und Diethylester der Maleinsäure bzw. Fumarsäure, oder Maleinsäureanhydrid enthalten.

In einer bevorzugten Ausführungsform enthalten die Vinylester-Copolymerisate und die (Meth)acrylsäureester-Copolymerisate noch 0.05 bis 10.0 Gew%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure; aus der Gruppe der ethylenisch ungesättigten Carbonsäureamide, vorzugsweise Acrylamid; aus der Gruppe der ethylenisch ungesättigten Sulfonsäuren bzw. deren Salze, vorzugsweise Vinylsulfonsäure; und/oder aus der Gruppe der mehrfach ethylenisch ungesättigten Comonomeren, beispielsweise Divinyladipat, Diallylmaleat, Allylmethacrylat oder Triallylcyanurat. Als Hilfsmonomere geeignet sind auch vernetzend wirkende Comonomere, beispielsweise Acrylamidoglykolsäure (AGA), Methylacryl-amidoglykolsäuremethylester (MAGME), N-Methylolacrylamid (NMAA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats.

Entsprechendes wie für die (Meth)acrylsäureester-Copolymerisate gilt für die Copolymerisate der Ester der Malein- oder Fumarsäure.

In der am meisten bevorzugten Ausführüngsform werden die ethylenisch ungesättigten Monomere mit 0.02 bis 5.0 Gew%, vorzugsweise 0.05 bis 2.0 Gew%, bezogen auf das Gesamtgewicht der Monomere, von ethylenisch ungesättigten Siliciumverbindungen copolymerisiert, die mindestens eine, an ein Siliciumatom gebundene, hydrolisierbare Gruppe oder mindestens eine Si-OH-Gruppe enthalten. Geeignete ethylenisch ungesättigte Siliciumverbindungen lassen sich mit der allgemeinen Formel R¹-SiRₐ(OR²)₃₋ₐ zusammenfassen, mit a = 0 bis 2, wobei R gleich oder verschieden ist und verzweigte oder unverzweigte Alkylreste mit 1 bis 22 C-Atome, Cycloalkylreste mit 3 bis 10 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether, Ester-, Amid-, Nitril-, Hydroxyl-, Amin-, Epoxid-, Carboxyl-, Carbonsäureanhydrid-und Carbonylgruppen substituiert sein können, R¹ ein ethylenisch ungesättigter organischer Rest ist und R² gleiche oder verschiedene Reste aus der Gruppe Wasserstoff, C₁-C₆-Alkyl-oder -Alkoxyalkyl-Rest bedeutet. Der Siedepunkt dieser Verbindungen ist unerheblich. Auch können diese Verbindungen gegebenenfalls wasserlöslich sein. Weiter ist es möglich diese copolymerisierbaren ethylenisch ungesättigten Siliciumverbindungen, vor der Copolymerisation mit den organischen Monomeren, mit den erfindungsgemäß zu verwendenden Organosiliciumverbindungen umzusetzen.

Bevorzugte siliciumhaltige Monomere sind Verbindungen der allgemeinen Formeln:
CH₂=CH-(CH₂)₀₋₈-SiR³ₐ(OR⁴)₃₋ₐ,
CH₂=CR⁵-CO₂-(CH₂)_{b}-SiR³ₐ(OR⁴)₃₋ₐ, 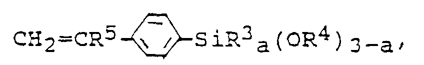 HS(CH₂)_{b}-SiR³ₐ(OR⁴)₃₋ₐ, 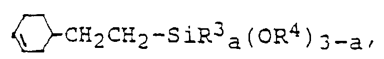 mit a=0-2, b=1-6,R³ = CH₃, C₆H₅, R⁴ = H, CH₃, C₂H₅, C₃H₇, C₆H₅, (CH₂)₂₋₃-O-(CH₂)₁₋₂H und R⁵ = H, CH₃.

Besonders bevorzugte siliciumhaltige Monomere sind γ-Acrylbzw. γ-Methacryloxypropyltri(alkoxy)silane und Vinyltrialkoxysilane, wobei als Alkoxygruppen z.B. Methoxy-, Ethoxy-, Methoxyethylen-, Ethoxyethylen-, Methoxypropylenglykolether-bzw. Ethoxypropylenglykolether-Reste eingesetzt werden können. Am meisten bevorzugt werden Vinyltrimethoxy- und Vinyltriethoxysilan, γ-Methacryloxypropyltriethoxysilan.

Bevorzugte, nicht copolymerisierbare, in Wasser dispergierbare Organosiliciumverbindungen mit einem Siedepunkt > 160°C (bei Normaldruck) aus der Gruppe der Silane, Polysilane, Oligosiloxane, Polysiloxane, Carbosilane, Polycarbosilane, Carbosiloxane, Polycarbosiloxane, Polysilylendisiloxane sind:
Kieselsäureester Si(OR')₄, Organoorganoxysilane SiRₙ(OR')₄₋ₙ mit n = 1 bis 3, Organosilanole SiRₙ(oH)₄₋ₙ mit n = 1 bis 3, Polysilane der allgemeinen Formel R₃Si(SiR₂)ₙSiR₃ mit n = 0 bis 500, bevorzugt 0 bis 8, Di-, Oligo- und Polysiloxane aus Einheiten der allgemeinen Formel
R_{c}H_{d}Si(OR')ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atome, Cycloalkylreste mit 3 bis 10 C-Atomen, Aryl-, Aralkyl-, Alkylarylreste mit 6 bis 18 C-Atomen bedeutet, wobei die genannten Reste R auch mit Halogenen wie F oder Cl, mit Ether, Thioether, Ester-, Amid-, Nitril-, Hydroxyl-, Amin-, Carboxyl-, Sulfonsäure-, Carbonsäureanhydrid- und Carbonylgruppen substituiert sein können, wobei im Falle der Polysilane R auch die Bedeutung OR' haben kann.

Besonders bevorzugte Organosiliciumverbindungen sind: Tetraethoxysilan, Methyltripropoxysilan, Methyltri(ethoxyethoxy)silan, γ-Chlorpropyltriethoxysilan, β-Nitrilethyltriethoxysilan, γ-Mercaptopropyltriethoxy- und -trimethoxysilan, Phenyltriethoxysilan, iso-Octyltriethoxysilan, Dipropyldiethoxysilan, Methylphenyldiethoxysilan, Diphenyldimethoxysilan, Triphenylsilanol sowie deren vorzugsweise flüssigen Kondensationsprodukte, gegebenenfalls mit anderen niedrigsiedenden und/oder wasserlöslichen Silanen, wie Methyltrimethoxysilan, γ-Aminopropyltriethoxysilan oder andere Aminofunktionen enthaltenden Silanen wie H₂NCH₂CH₂NHCH₂CH₂CH₂Si(OCH₃)₃, 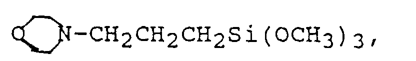 quartäre Ammoniumsalzgruppen enthaltende Silane wie C₁₈H₃₇N^{⊕}(CH₃)₂-CH₂CH₂CH₂Si(OCH₃)₃Cl^{⊖}, Epoxidgruppen enthaltende Silane wie 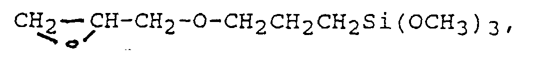 Carbonsäure- und Carbonsäureanhydridfunktionelle Silane wie

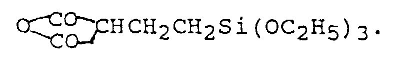

Weiterhin seien genannt: Die Disilane Dimethyltetraalkoxydisilan, Tetramethyldialkoxydisilan, Trimethyltrialkoxydisilan oder deren im allgemeinen aus den entsprechenden Chlorverbindungen erhältlichen (Co)kondensate. Besonders bevorzugt sind auch durch Trimethylsiloxygruppen endblockierte Methylhydrogenpolysiloxane, durch Trimethylsiloxygruppen endblockierte Mischpolymere aus Dimethylsiloxan- und Methylhydrogensiloxan-Einheiten und in den endständigen Einheiten je eine Si-gebundene Hydroxylgruppe aufweisende Dimethylpolysiloxane. Weiter seien genannt, in den Monomeren lösliche organosiliciumverbindungen aus der Gruppe Alkyl- und Phenylharze und der Harze und Öle, welche Epoxid- oder Amin-, Propyl- oder höhere Alkylgruppen enthalten.

Die Herstellung der Organosiliciumverbindungen kann nach Verfahren erfolgen wie sie in Noll, Chemie und Technologie der Silicone, 2. Auflage 1968, Weinheim und in Houben-Weyl, Methoden der organischen Chemie, Band E20, S. 1782f., 2219f., Georg Thieme Verlag, Stuttgart, 1987 beschrieben sind.

Die Polymerisation erfolgt vorzugsweise mit dem Emulsionspolymerisationsverfahren, kann aber auch mittels des Block-oder des L£oungspolymerisationsverfahrens durchgeführt werden. Mit den beiden letztgenannten Verfahren können auch radikalisch polymerisierbare, wasserempfindliche Monomere wie Ketenacetale polymerisiert werden. In diesen Fällen werden die in organischen, wasserunlöslichen Lösungsmitteln gelösten Zusammensetzungen von Polymer und Organosiliciumverbindung(en) mit Hilfe der später genannten, wasserlöslichen, filmbildenden Schutzkolloide und gegebenenfalls mit Emulgatoren emulgiert und, gegebenenfalls nach Zugabe weiterer Zusatzstoffe, sprühgetrocknet.

Das als bevorzugt genannte Emulsionspolymerisationsverfahren wird im offenen Reaktionsgefäß oder in Druckgefäßen, vorzugsweise in einem Temperaturbereich von 0 bis 100°C durchgeführt und mit den für die Emulsionspolymerisation üblicherweise eingesetzten Methoden eingeleitet. Die Initiierung erfolgt mittels der gebräuchlichen, zumindest teilweise wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium-und Kaliumpersulfat, -peroxodisulfat; Wasserstoffperoxid, t-Butylperoxid; Alkylhydroperoxide, wie tert.-Butylhydroperoxid; Kalium-, Natrium- und Ammoniumperoxodiphosphat; Azoverbindungen, wie Azobisisobutyronitril oder Azobiscyanovaleriansäure. Gegebenenfalls können die genannten radikalischen Initiatoren auch in bekannter Weise mit 0.01 bis 1.0 Gew%, bezogen auf das Gesamtgewicht der Monomeren, Reduktionsmittel kombiniert werden. Geeignet sind zum Beispiel Alkali-Formaldehydsulfoxylate und Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und/oder Schutzkolloide eingesetzt werden. Geeignete Emulgatoren sind sowohl anionische, kationische als auch nichtionische Emulgatoren. Bevorzugt sind solche, die nicht im Schutzkolloid löslich sind und deren Molekulargewichte im Unterschied zum Schutzkolloid unter 2000 liegen. Die Emulgatoren werden in einer Menge von 0 bis 6 Gew%, bezogen auf das Gesamtgewicht der Monomeren, eingesetzt. Geeignete Emulgatoren sind dem Fachmann geläufig und finden sich beispielsweise in Houben-Weyl, Methoden der organischen Chemie, Bd. XIV, 1, Makromolekulare Stoffe, Georg Thieme Verlag, Stuttgart, 1961, 192-208.

Die Schutzkolloide werden vorzugsweise in Mengen bis zu 15 Gew%, bezogen auf das Gesamtgewicht der Monomeren, eingesetzt. Beispiele hierfür sind Vinylalkohol/Vinylacetat-Copolymere mit einem Gehalt von 80 bis 100 Mol% Vinylalkoholeinheiten; Polyvinylpyrrolidone mit einem Molekulargewicht von 5000 bis 400000; Hydroxyethylcellulosen mit einem Substitutionsgradbereich von 1.5 bis 3; Polysaccharide in wasserlöslicher Form wie Stärken (Amylose und Amylopectin), Cellulose, Guar, Tragcantinsäure, Dextran, Alginate und deren Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und VinylethermaleinsäureCopolymere. In einer besonders bevorzugten Ausführungsform wird die Polymerisation mit Schutzkolloid ohne Zugabe von Emulgator durchgeführt.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe zugesetzt werden.

Die Polymerisation kann, unabhängig vom gewählten Polymerisationsverfahren, diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden.

Die in Wasser dispergierbare Organosiliciumverbindung wird vorzugsweise, einzeln oder im Gemisch, erst im Verlauf der Polymerisation zudosiert. Besonders bevorzugt erfolgt die Dosierung nach einem Umsatz von 50 bis 98 %, am meisten bevorzugt von 80 bis 95 %. Die Dosierung kann in Lösung in einem oder mehreren organischen Monomeren, oder getrennt in reiner Form, oder als Emulsion erfolgen. Vorzugsweise werden 0.5 bis 20 %, bezogen auf das Gesamtgewicht der Monomerphase, an Organosiliciumverbindungen zugegeben.

In der am meisten bevorzugten Ausführungsform werden zusätzlich die bereits genannten ethylenisch ungesättigten, siliciumhaltigen Monomere mit den organischen Monomeren copolymerisiert. Diese Monomere können in reiner Form, in Lösung,

zum Beispiel in den organischen Monomeren, oder als Emulsion, gegebenenfalls mit den organischen Monomeren vorgelegt oder während der Polymerisation zudosiert werden. Vorzugsweise erfolgt die Zugabe nachdem mehr als 50 %, besonders bevorzugt mehr als 80 % der ethylenisch ungesättigten, organischen Comonomere polymerisiert sind.

Der Festgehalt der so erhältlichen Dispersionen beträgt 20 bis 60 %.

Mit der erfindungsgemäßen Verfahrensweise erhält man bei der Copolymerisation von Si-haltigen Monomeren eine Dispersion von Teilchen bei denen das Organopolymer zumindest teilweise über C-Si-O-Si-Bindungen mit der organosiliciumverbindung, in Form von Pfropfcopolymeren, verbunden ist. Wird ohne Si-haltige Monomere polymerisiert, liegen die Organosiliciumverbindung und das Organopolymer häufig in Form von Interpenetrated Networks (IPN) bzw. semiinterpenetrated Networks oder als Mischung in gleichen Dispersionsteilchen vor. Die hiermit mögliche große Variationsbreite der inneren Struktur der Redispersionspulver-Teilchen ermöglicht eine Optimierung für das jeweilige Anwendungsgebiet, ohne großen technischen Aufwand durch geringfügige Änderungen des Herstellungsverfahrens und der Rezeptur.

Die Trocknung der Dispersion zur Herstellung der Dispersionspulverzusammensetzung erfolgt mittels Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70 bis 90°C, je nach Anlage, Tg des Harzes und gewünschtem Trocknungsgrad, gewählt.

Bei der Sprühtrocknung kann gegebenenfalls eine Mischung aus der erfindungsgemäß hergestellten Dispersion mit einem Festgehalt von vorzugsweise 20 bis 60 % und von weiteren Zusatzstoffen, gemeinsam versprüht und getrocknet werden.

In einer bevorzugten Ausführungsform enthält die Dispersionspulverzusammensetzung 8 bis 50 Gew%, vorzugsweise 10 bis 25 Gew% Schutzkolloid, bezogen auf die Gesamtmenge von wasserunlöslichem Polymer und Organosiliciumverbindung, wobei zumindest ein Teil der Schutzkolloidmenge der fertigen Dispersion oder der Lösung der Zusammensetzung aus Polymer und Organosiliciumverbindung vor dem Sprühtrocknen, bevorzugt in Form einer wässrigen Lösung, zugegeben wird. Geeignete Schutzkolloide sind beispielsweise Polyvinylalkohole und deren Derivate; Polysaccharide in wasserlöslicher Form wie Stärken (Amylose und Amylopectin), Cellulose, Guar, Tragcantinsäure, Dextran, Alginate und deren Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Weitere Bestandteile der Dispersionspulverzusammensetzung sind gegebenenfalls Emulgatoren, die in den eingesetzten Schutzkolloiden nicht löslich sind, sowie Antiblockmittel wie Ca- bzw. Mg-carbonat, Talk, Gips, Kieselsäure, Silicate mit Teilchengrößen vorzugsweise im Bereich von 10 nm bis 10µm.

Die Dispersionspulverzusammensetzung kann in den typischen Anwendungsbereichen eingesetzt werden. Beispielsweise in bauchemischen Produkten in Verbindung mit anorganischen, hydraulisch abbindenden, Bindemitteln wie Zementen (Portland-, Aluminat-, Trass-, Hüllen-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien.

Vorzugsweise wird die Dispersionspulverzusammensetzung als hydrophobierendes Bindemittel in Anwendungsgebieten eingesetzt, in denen neben einer guten Haftung auch eine reduzierte Wasseraufnahme und/oder ein wasserabweisender Effekt erwünscht ist. Wie auch aus den Ergebnissen der anwendungstechnischen Prüfung hervorgeht, resultiert bei der Verwendung der erfindungsgemäßen Dispersionspulverzusammensetzung beispielsweise in Putzen eine sehr niedere Wasseraufnahme, ohne daß die übrigen mechanischen Eigenschaften in nachteiliger Weise beeinflußt werden würden.

### Beispiele:

### Herstellung der Dispersionspulver-Zusammensetzungen:

### Beispiel 1:

In einem 18 1-Autoklaven wurde eine Lösung von 6400 g Vinylacetat, 320 g Isooctyltriethoxysilan und 7 g Methacryloxypropyltriethoxysilan in eine Lösung von 524 g eines Polyvinylalkohols mit einer Höpplerviskosität von 4 mPas (in einer 4 %-igen Lösung bei 20°C) und einer Verseifungszahl von 140 in 4890 g Wasser einemulgiert. Es wurden 1480 g Ethylen aufgedrückt und bei 50°C mit dem Redoxkatalysatorsystem 26 g Kaliumpersulfat (3 %-ige wäßrige Lösung) und 13 g Brüggolit (Na-Formaldehydsulfoxylat; 1.5 %-ige wäßrige Lösung) innerhalb von 4 Stunden polymerisiert. Es resultierte eine Dispersion mit einem Festgehalt von 57 %.
Nach dem Entspannen wurden 5 Teile, gerechnet auf 100 Teile Dispersion, eines Polyvinylalkohols mit einer Höpplerviskosität von 25 mPas (in einer 4 %-igen Lösung bei 20°C) und einer Verseifungszahl von 140 in die Dispersion eingerührt und anschließend der Festgehalt der Dispersion mit Wasser auf 33 % eingestellt.
Die Dispersion wurde in einem Nebulosa-Sprühtrockner unter den folgenden Bedingungen verdüst:

| | |
|---|---|
| Eintrittstemperatur | ca. 112°C, |
| Austrittstemperatur | 80°C, |
| Preßluftdruck vor der 2-Stoffdüse | 4 bar, |
| Durchsatz | 12 l/h. |

Nach der Verdüsung wurden 10 Gew%, bezogen auf das sprühgetrocknete Produkt, eines handelsüblichen Antiblockmittels (Gemisch aus Ca/MgCo₃ und Mg-hydrosilicat) eingearbeitet. Das trockene Pulver war sehr gut rieselfähig und in Wasser redispergierbar.

### Beispiel 2:

Es wurde analog Beispiel 1 vorgegangen, mit dem Unterschied, daß anstelle von Methacryloxypropyltriethoxysilan Vinyltriethoxysilan copolymerisiert wurde. Das so erhaltene trockene Pulver war sehr gut rieselfähig und in Wasser redispergierbar.

### Beispiel 3:

Beispiel 1 wurde wiederholt, jedoch wurden anstelle von Isooctyltriethoxysilan 4 Gew%, bezogen auf die Comonomermenge, eines mit 1.5 Mol Wasser je 2 mol Silan ankondensiertes Isooctyltrimethoxysilan verwendet. Das so erhaltene Pulver war sehr gut rieselfähig und in Wasser redispergierbar.

### Beispiel 4:

Beispiel 2 wurde wiederholt, jedoch wurden das copolymerisierbare und das nicht-copolymerisierbare Silan nicht in der Vorlage in Vinylacetat gelöst, sondern im Gemisch als Emulsion der Vorlage zugegeben. Das so erhaltene Pulver war sehr gut rieselfähig und in Wasser redispergierbar.

### Beispiel 5:

Beispiel 2 wurde dahingehend abgeändert, daß die Silanmischung in 10 % des Vinylacetats gelöst und diese Lösung erst bei beginnenden Abklingen (90 % Umsatz) der Polymerisation zudosiert wurde. Das so erhaltene Pulver war sehr gut rieselfähig und in Wasser redispergierbar.

### Beispiel 6:

Es wurde analog Beispiel 3 vorgegangen, mit dem Unterschied, daß kein Methacryloxypropyltriethoxysilan copolymerisiert wurde. Das so erhaltene Pulver war sehr gut rieselfähig und in Wasser redispergierbar.

### Beispiel 7:

In einem 18 1-Reaktor wurden in eine Lösung von 320 g Polyvinylalkohol (Höpplerviskosität 4 mPas in einer 4 %-igen Lösung bei 20°C, Verseifungszahl = 140) und 290 g eines carbonylgruppenhaltigen Polyvinylalkohols (LL 620, Produkt der Wacker-Chemie) in 7140 g Wasser ein Gemisch aus 568 g n-Butylacrylat in 568 g Styrol einemulgiert und die Emulsion auf 80°C erwärmt. Unter Konstanthalten der Temperatur wurde die Polymerisation durch Zugabe von t-Butylperoxid (5 %-ige wäßrige Lösung) und Na-Formaldehydsulfoxylat (8 %-ige wäßrige Lösung) eingeleitet. Der Gesamtverbrauch betrug insgesamt 44 g t-Butylhydroperoxid und 70 g Na-Formaldehydsulfoxylat. 5 Minuten nach beginnendem Anstieg der Innentemperatur wurde ein Gemisch aus 3220 g n-Butylacrylat und 3220 g Styrol über einen Zeitraum von 4 Stunden zudosiert. Nach Ablauf von 3.5 Stunden wurden 325 g Isooctyltriethoxysilan und 7 g Methacryloxypropyltriethoxysilan mit dem restlichen n-Butylacrylat/Styrol-Gemisch zudosiert. Nach Dosierende wurde eine Stunde bei 80°C polymerisiert und schließlich 3 Stunden bei 45°C nachpolymerisiert.
Die so erhaltene Dispersion wurde jeweils mit 2.5 Gew%, bezogen auf das Gesamtgewicht der Dispersion, eines Polyvinylalkohols mit einer Höpplerviskosität von 25 mPas in 4 %-iger wäßriger Lösung bei 20°C und einer Verseifungszahl von 140 und eines Polyvinylalkohols mit einer Höpplerviskosität von 13 mPas in 4 %-iger wäßriger Lösung bei 20°C und einer Verseifungszahl von 140 versetzt und mit Wasser auf einen Festgehalt von 33 % verdünnt. Die Verdüsung erfolgte analog Beispiel 1.
Das so erhaltene Pulver war sehr gut redispergierbar und rieselfähig.

### Beispiel 8:

Es wurde analog Beispiel 7 vorgegangen, mit dem Unterschied, daß anstelle von Methacryloxypropyltriethoxysilan dieselbe Menge Vinyltriethoxysilan verwendet wurde und zusammen mit dem Isooctyltriethoxysilan von Anfang an mit dem n-Butylacrylat/Styrol-Gemisch zudosiert wurde. Das so erhaltene Pulver war sehr gut rieselfähig und in Wasser redispergierbar.

### Vergleichsbeispiel 1:

Es wurde analog Beispiel 1 vorgegangen, jedoch ohne Zugabe von Isooctyltriethoxysilan und ohne Copolymerisation von Methacryloxypropyltriethoxysilan polymerisiert. Es wurde ein sehr gut rieselfähiges und in Wasser redispergierbares Pulver erhalten.

### Vergleichsbeispiel 2:

Es wurde analog Beispiel 7 vorgegangen, jedoch ohne Zugabe von Isooctyltriethoxysilan und ohne Copolymerisation von Methacryloxypropyltriethoxysilan polymerisiert. Es wurde ein sehr gut rieselfähiges und in Wasser redispergierbares Pulver erhalten.

### Anwendungstechnische Prüfung:

Die in den Beispielen bzw. den Vergleichsbeispielen hergestellten Produkte wurden in folgender Rollputz- oder Fugenfüllerrezeptur eingesetzt:

### Rollputz-Rezeptur::

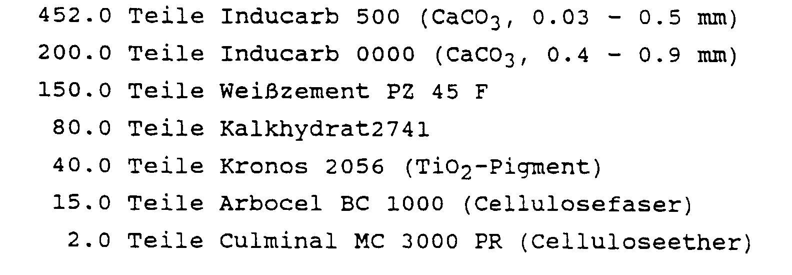

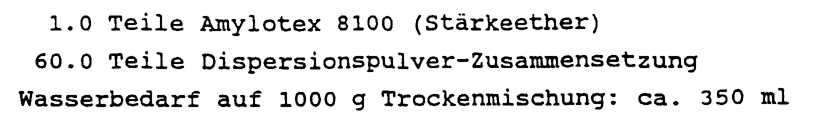

### Fugenfüller-Rezeptur:

| | |
|---|---|
| 300.0 Teile | Portlandzement PZ 35 F |
| 40.0 Teile | Aluminat-Zement |
| 649.5 Teile | Quarzsand (0.1 - 0.4 mm) |
| 0.5 Teile | Culminal C 8556 (Celluloseether) |
| 10.0 Teile | Dispersionspulver-Zusammensetzung |
| Wasserbedarf auf 1000g Trockenmischung: | 200 ml |

### Testung der Fugenfüller-Rezeptur:

Die Druckfestigkeit von mit diesen Rezepturen hergestellten Putzen wurde gemäß DIN 1164 getestet.
Die Wasseraufnahme wurde gemäß DIN 52617 nach einer Trockenlagerung der Rezeptur von 14 Tagen bei 23°C/50 % relative Luftfeuchte bestimmt.
Die Verarbeitbarkeit wurde qualitativ bewertet.
Die Ergebnisse der Testung sind in Tabelle 1 zusammengefaßt.

### Testung der Rollputz-Rezeptur:

Die Haftzugfestigkeit von mit diesen Rezepturen hergestellten Putzen wurde gemäß DIN 1164 getestet.
Mit der Methode A erfolgte die Messung nach einer Trockenlagerung von 28 Tagen bei 23°C/50 % relat. Luftfeuchte. Mit der Methode B erfolgte die Messung nach 7 Tagen Trockenlagerung bei 23°C/50 % relat. Luftfeuchte und weiteren 21 Tagen Lagerung unter Wasser bei 23°C.
Die Biegezugfestigkeit und Druckfestigkeit wurden gemäß der obengenannten Norm nach Trockenlagerung von 28 Tagen bei 23°C/50 % relativer Luftfeuchte bestimmt.
Der Wasseraufnahmekoeffizient wurde gemäß DIN 52617 nach einer Trockenlagerung der Rezeptur von 14 Tagen bei 23 °C/50 % relativer Luftfeuchte bestimmt.
Die Ergebnisse der Testung sind in Tabelle 2 zusammengefaßt.

**Tabelle 1:**

| (Testung der Fugenfüller-Rezeptur) | | |
|---|---|---|
| Beispiel | Beispiel 6 | Vergleichsbeispiel 1 |
| Wasseraufnahme (kg/m²xh^{0.5}) | 0.197±0.005 | 0.759±0.020 |
| Druckfestigkeit (N/mm²) | 16.0±0.3 | 17.4±0.5 |
| Verarbeitbarkeit | etwas klebrig | etwas klebrig |

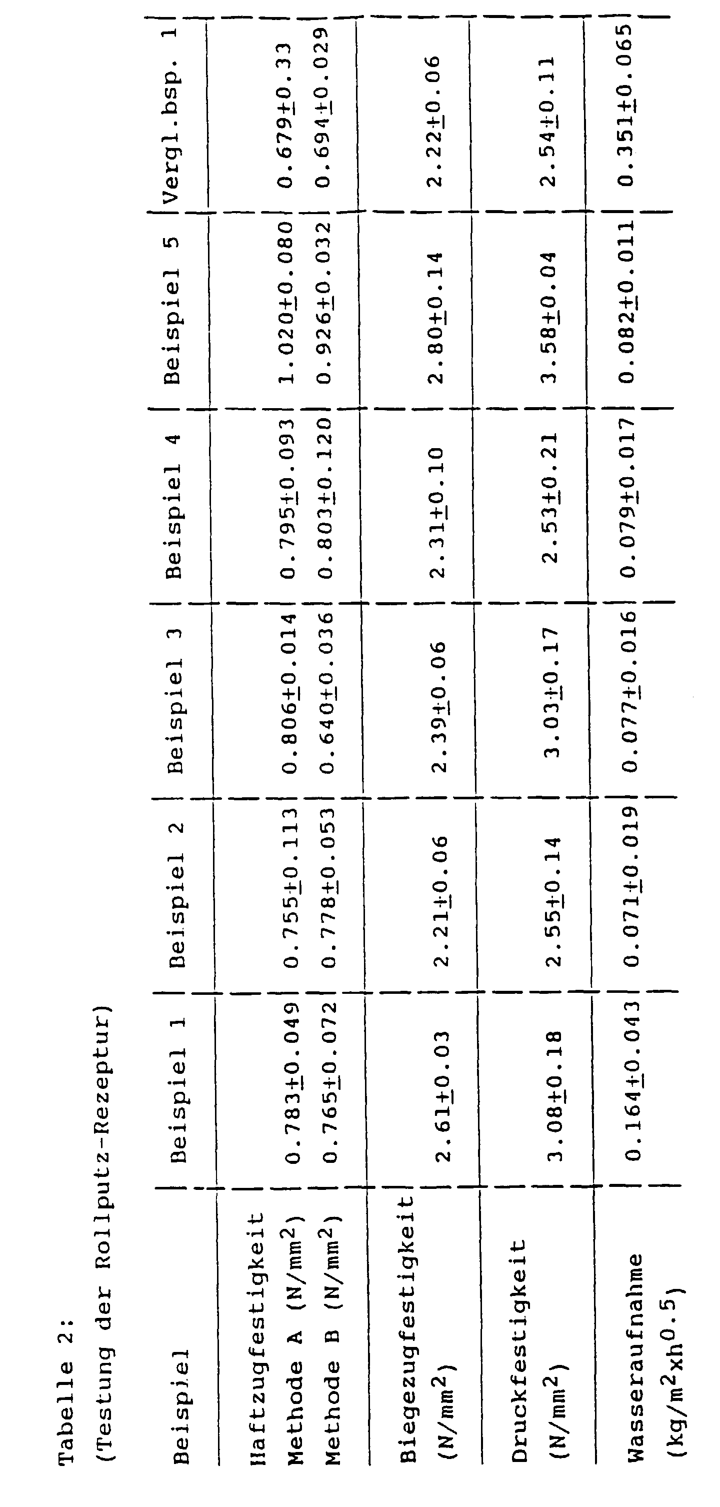

## Patentansprüche

1. In Wasser redispergierbare Dispersionspulverzusammensetzung auf der Basis von wasserunlöslichen Homo- oder Copolymerisaten von ethylenisch ungesättigten Monomeren und einer oder mehrerer Organosiliciumverbindungen sowie gegebenenfalls weiterer Zusatzstoffe wie Schutzkolloide und Antiblockmittel, erhältlich durch
a) Polymerisation von einem oder mehreren Monomeren in Gegenwart von 0.1 bis 30 Gew%, bezogen auf das Gesamtgewicht der Monomeren, einer oder mehrerer, nicht copolymerisierbarer, in Wasser dispergierbarer Organosiliciumverbindungen mit einem Siedepunkt bei Normaldruck von > 160°C aus der Gruppe der Silane, Polysilane, Oligosiloxane, Polysiloxane, Carbosilane, Polycarbosilane, Carbosiloxane, Polycarbosiloxane, Polysilylendisiloxane und
b) Sprühtrocknung der so erhaltenen Emulsion, gegebenenfalls vor oder nach Zugabe der genannten Zusatzstoffe.

2. Dispersionspulverzusammensetzung nach Anspruch 1, dadurch gekennzeichnet, daß diese erhältlich ist durch Emulsionspolymerisation von einem oder mehreren Monomeren aus der Gruppe der Vinylester von unverzweigten oder verzweigten Alkylcarbonsäuren mit 1 bis 15 C-Atomen; der Methacrylsäureester und Acrylsäureester von unverzweigten oder verzweigten Alkoholen mit 1 bis 12 C-Atomen; von Fumar- und/oder Maleinsäuremono- oder -diester von unverzweigten oder verzweigten Alkoholen mit 1 bis 12 C-Atomen;
von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert werden können;
von Vinylaromaten wie Styrol, Methylstyrol, Vinyltoluol; von Vinylhalogenverbindungen wie Vinylchlorid.

3. Dispersionspulverzusammensetzung nach Anspruch 1 oder 2, dadurch gekennzeichnet, daß diese erhältlich ist durch Copolymerisation der ethylenisch ungesättigten Monomere mit 0.02 bis 5.0 Gew%, bezogen auf das Gesamtgewicht der Monomere, von ethylenisch ungesättigten Siliciumverbindungen mit der allgemeinen Formel R¹-SiRₐ(OR²)₃₋ₐ, mit a = 0 bis 2, wobei R gleich oder verschieden ist und verzweigte oder unverzweigte Alkylreste mit 1 bis 22 C-Atome, Cycloalkylreste mit 3 bis 10 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether, Ester-, Amid-, Nitril-, Hydroxyl-, Amin-, Epoxid-, Carboxyl-, Carbonsäureanhydrid- und Carbonylgruppen substituiert sein können, R¹ ein ethylenisch ungesättigter organischer Rest ist und R² gleiche oder verschiedene Reste aus der Gruppe Wasserstoff, C₁-C₆-Alkyl- oder -Alkoxyalkyl-Rest bedeutet.

4. Dispersionspulverzusammensetzung nach Anspruch 3, dadurch gekennzeichnet, daß als ethylenisch ungesättigte Siliciumverbindungen eine oder mehrere Verbindungen der allgemeinen Formeln CH₂=CH-(CH₂)₀₋₈-SiR³ₐ(OR⁴)₃₋ₐ, CH₂=CR⁵-CO₂-(CH₂)_{b}-SiR³ₐ(OR⁴)₃₋ₐ, 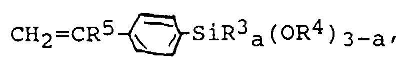 HS(CH₂)_{b}-SiR³ₐ(OR⁴)₃₋ₐ, 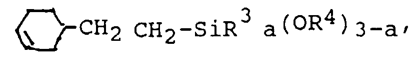 mit a=0-2, b=1-6, R³ = CH₃, C₆H₅, R⁴ = H, CH₃, C₂H₅, C₃H₇, c₆H₅, (CH₂)₂₋₃-O-(CH₂)₁₋₂H und R⁵ = H, CH₃, copolymerisiert werden.

5. Dispersionspulverzusammensetzung nach Anspruch 1 bis 4, dadurch gekennzeichnet, daß die Emulsionspolymerisation in Gegenwart von einer oder mehreren, in Wasser dispergierbaren Organosiliciumverbindungen mit einem Siedepunkt > 160°C (bei Normaldruck) erfolgt, aus der Gruppe der Kieselsäureester Si(OR')₄, der Organoorganoxysilane SiRₙ(OR')₄₋ₙ mit n = 1 bis 3, Organosilanole SiRₙ(OH)₄₋ₙ mit n = 1 bis 3, Polysilane der allgemeinen Formel R₃Si(SiR₂)ₙSiR₃ mit n = 0 bis 500 und Di-, Oligo- und Polysiloxane aus Einheiten der allgemeinen Formel
R_{c}H_{d}Si(OR')ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atomen, Cycloalkylreste mit 3 bis 10 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether, Ester-, Amid-, Nitril-, Hydroxyl-, Amin-, Carboxyl-, Sulfonsäure-, Carbonsäureanhydrid- und Carbonylgruppen substituiert sein können, wobei im Falle der Polysilane R auch die Bedeutung OR' haben kann.

6. Verfahren zur Herstellung von Dispersionspulverzusammensetzungen gemäß Anspruch 1 bis 5, mittels
a) Emulsionspolymerisation im offenen Reaktionsgefäß oder in Druckgefäßen, in einem Temperaturbereich von 0 bis 100°C, eingeleitet mit den für die Emulsionspolymerisation üblicherweise eingesetzten, zumindest teilweise wasserlöslichen, Radikalbildnern, wobei als Dispergiermittel Emulgatoren und/oder Schutzkolloide eingesetzt werden, und die Polymerisation diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt wird und
b) vor oder nach der Sprühtrocknung gegebenenfalls noch Schutzkolloid zugegeben wird.

7. Verfahren nach Anspruch 6, dadurch gekennzeichnet, daß die nicht copolymerisierbare, in Wasser dispergierbare Organosiliciumverbindung einzeln oder im Gemisch, vorgelegt oder erst im Verlauf der Polymerisation zudosiert wird, wobei die Dosierung in Lösung in einem oder mehreren organischen Monomeren, oder getrennt in reiner Form, oder als Emulsion vorgenommen wird.

8. Verfahren nach Anspruch 6 oder 7, dadurch gekennzeichnet, daß die ethylenisch ungesättigten, siliciumhaltigen Monomere vorgelegt oder erst im Verlauf der Polymerisation zudosiert werden, wobei die Dosierung in Lösung, in reiner Form oder als Emulsion vorgenommen wird.

9. Verwendung von Dispersionspulverzusammensetzungen nach Anspruch 1 bis 5 als Bindemittel in bauchemischen Produkten in Verbindung mit anorganischen, hydraulisch abbindenden Bindemitteln wie Zement, Gips, Wasserglas, für die Herstellung von Bauklebern, Putzen, Spachtelmassen, Fußbodenspachtelmassen, Fugenmörtel und Farben.

## Claims

1. Dispersion powder composition which is redispersible in water and is based on water-insoluble homo- or copolymers of ethylenically unsaturated ionomers and one or more organosilicon compounds and, if appropriate, further additives, such as protective colloids and antiblocking agents, obtainable by
a) polymerization of one or more monomers in the presence of 0.1 to 30% by weight, based on the total weight of the monomers, of one or more non-copolymerizable organosilicon compounds which are dispersible in water and have a boiling point under normal pressure of > 160°C, from the group consisting of silanes, polysilanes, oligosiloxanes, polysiloxanes, carbosilanes, polycarbosilanes, carbosiloxanes, poly-carbosiloxanes and polysilylenedisiloxanes and
b) spray drying of the emulsion thus obtained, if appropriate before or after addition of the additives mentioned.

2. Dispersion powder composition according to Claim 1, characterized in that this is obtainable by emulsion polymerization of one or more monomers from the group consisting of vinyl esters of unbranched or branched alkylcarboxylic acids having 1 to 15 C atoms; of methacrylic acid esters and acrylic acid esters of unbranched or branched alcohols having 1 to 12 C atoms; of fumaric and/or maleic acid mono- or diesters of unbranched or branched alcohols having 1 to 12 C atoms;
of dienes, such as butadiene or isoprene, and of olefins, such as ethene or propene, it being possible for the dienes to be copolymerized, for example with styrene, (meth)acrylic acid esters or the esters of fumaric or maleic acid;
of vinyl aromatics, such as styrene, methylstyrene or vinyltoluene; and of vinyl halogen compounds, such as vinyl chloride.

3. Dispersion powder composition according to Claim 1 or 2, characterized in that this is obtainable by copolymerization of the ethylenically unsaturated monomers with 0.02 to 5.0% by weight, based on the total weight of the monomers, of ethylenically unsaturated silicon compounds with the general formula R¹-SiRₐ(OR²)₃₋ₐ, where a = 0 to 2, wherein R is identical or different and denotes branched or unbranched alkyl radicals having 1 to 22 C atoms, cycloalkyl radicals having 3 to 10 C atoms, or aryl, aralkyl or alkylaryl radicals having 6 to 18 C atoms, where the radicals R mentioned can also be substituted by halogens, such as F or Cl, by ether, thioether, ester, amide, nitrile, hydroxyl, amine, epoxide, carboxyl, carboxylic acid anhydride and carbonyl groups, R¹ is an ethylenically unsaturated organic radical and R² denotes identical or different radicals from the group consisting of hydrogen, C₁-C₆-alkyl or -alkoxyalkyl radical.

4. Dispersion powder composition according to Claim 3, characterized in that one or more compounds of the general formulae CH₂=CH-(CH₂)₀₋₈-SiR³ₐ(OR⁴)₃₋ₐ,
CH₂=CR⁵-CO₂-(CH₂)_{b}-SiR³ₐ(OR⁴)₃₋ₐ, 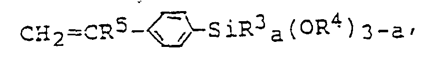 HS(CH₂)_{b}-SiR³ₐ(OR⁴)₃₋ₐ, 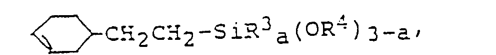 where a=0-2,
b=1-6, R³ = CH₃, C₆H₅, R⁴ = H, CH₃, C₂H₅, C₃H₇, C₆H₅, (CH₂)₂₋₃-O-(CH₂)₁₋₂H and R⁵ = H, CH₃, are copolymerized as the ethylenically unsaturated silicon compounds.

5. Dispersion powder composition according to Claim 1 to 4, characterized in that the emulsion polymerization is carried out in the presence of one of more organosilicon compounds which are dispersible in water and have a boiling point > 160°C (under normal pressure) from the group consisting of silicic acid esters Si(OR')₄, organo-organoxysilanes SiRₙ(OR')₄₋ₙ, where n = 1 to 3, organosilanols SiRₙ(oH)₄₋ₙ, where n = 1 to 3, polysilanes of the general formula R₃Si(SiR₂)ₙSiR₃ where n = 0 to 500, and di-, oligo- and polysiloxanes of units of the general formula R_{c}H_{d}Si(OR')ₑ(OH)_{f}O_{(4-c-d-e-f)/2} where c = 0 to 3, d = 0 to 1, e = 0 to 3, f = 0 to 3 and the sum c+d+e+f per unit is not more than 3.5, wherein R' represents identical or different alkyl radicals or alkoxyalkylene radicals having 1 to 4 C atoms, preferably denotes methyl or ethyl, and R is identical or different and denotes branched or unbranched alkyl radicals having 1 to 22 C atoms, cycloalkyl radicals having 3 to 10 C atoms, aryl, aralkyl or alkylaryl radicals having 6 to 18 C atoms, where the radicals R mentioned can also be substituted by halogens, such as F or Cl, by ether,- thioether, ester, amide, nitrile, hydroxyl, amine, carboxyl, sulphonic acid, carboxylic acid anhydride and carbonyl groups, where, in the case of the polysilanes, R can also have the meaning OR'.

6. Process for the preparation of dispersion powder compositions according to Claim 1 to 5 by means of
a) emulsion polymerization in an open reaction vessel or in pressure vessels, in a temperature range from 0 to 100°C, initiated with the at least partly water-soluble agents which form free radicals and which are usually employed for emulsion polymerization, emulsifiers and/or protective colloids being employed as dispersing agents, and the polymerization being carried out discontinuously or continuously, with or without the use of seed latices, with initial introduction of all the constituents or individual constituents of the reaction mixture, or with initial introduction of a portion of the constituents or of individual constituents of the reaction mixture and subsequent metering of the constituents or individual constituents of the reaction mixture, or by the metering method without an initial charge and
b) if appropriate a protective colloid also being added before or after the spray drying.

7. Process according to Claim 6, characterized in that the non-copolymerizable organosilicon compound which is dispersible in water, individually or as a mixture, is initially introduced or is metered in only in the course of the polymerization, the metering being carried out in solution in one or more organic monomers, or separately in the pure form, or as an emulsion.

8. Process according to Claim 6 or 7, characterized in that the ethylenically unsaturated silicon-containing monomers are initially introduced or are metered in only in the course of the polymerization, the metering being carried out in solution, in the pure form or as an emulsion.

9. Use of dispersion powder compositions according to Claim 1 to 5 as binders in chemical building products in combination with inorganic, hydraulically setting binders, such as cement, gypsum or water-glass, for the preparation of building adhesives, plasters, stopper compositions, flooring stopper compositions, joint mortars and paints.

## Revendications

1. Composition pulvérulente en dispersion, pouvant être redispersée dans l'eau, à base d'homo- ou de copolymères insolubles dans l'eau, de monomères éthyléniquement insaturés et d'un ou de plusieurs composés organosiliciques ainsi que, facultativement, d'autres additifs comme des colloïdes protecteurs et des agents antiadhérence, qui peut être obtenue par
a) polymérisation d'un ou de plusieurs monomères en présence de 0,1 à 30% en poids, sur base du poids total des monomères, d'un ou de plusieurs composés organosiliciques non copolymérisables, dispersibles dans l'eau, avec un point d'ébullition à pression normale de >160°C, parmi le groupe des silanes, polysilanes, oligosiloxane, polysiloxanes, carbosilanes, polycarbosilanes, carbosiloxanes, polycarbosiloxanes, polysilylènedisiloxanes, et
b) séchage par pulvérisation de l'émulsion ainsi obtenue, facultativement avant ou après l'addition des additifs cités.

2. Composition pulvérulente en dispersion suivant la revendication 1, caractérisée en ce que celle-ci peut être obtenue par polymérisation en émulsion d'un ou de plusieurs monomères parmi le groupe des esters vinyliques d'acides alcoylcarboxyliques linéaires ou ramifiés avec 1 à 15 atomes C; les esters de l'acide méthacrylique et les esters de l'acide acrylique d'alcools linéaires ou ramifiés avec 1 à 12 atomes C; les mono- ou diesters de l'acide fumarique et/ou maléique d'alcools linéaires ou ramifiés avec 1 à 12 atomes C;
de diènes comme le butadiène ou l'isoprène, ainsi que d'oléfines comme l'éthène ou le propène, où les diènes peuvent être copolymérisés, par exemple, avec le styrène, les esters de l'acide (méth)acrylique ou les esters de l'acide fumarique ou maléique;
de vinylaromatiques comme le styrène, le méthylstyrène, le vinyltoluène; de composés vinylhalogénés comme le chlorure de vinyle.

3. Composition pulvérulente en dispersion suivant la revendication 1 ou 2, caractérisée en ce que celle-ci peut être obtenue par copolymérisation des monomères éthyléniquement insaturés avec 0,02 à 5,0% en poids, sur base du poids total des monomères, de composés du silicium, éthyléniquement insaturés, de formule générale R¹-SiRₐ(OR²)₃₋ₐ, avec a = 0 à 2, où R est identique ou différent et représente un radical alcoyle linéaire ou ramifié avec 1 à 22 atomes C, un radical cycloalcoyle avec 3 à 10 atomes C, un radical aryle, aralcoyle, alcoylaryle avec 6 à 18 atomes C, où les radicaux R cités peuvent également être substitués par des halogènes comme F ou Cl, par des groupes éther, thioéther, ester, amide, nitrile, hydroxyle, amine, époxyde, carboxyle, anhydride d'acide carboxylique et carbonyle, R¹ est un radical organique éthyléniquement insaturé et R² représente des radicaux identiques ou différents parmi le groupe de l'hydrogène, les radicaux alcoyle ou alcoxyalcoyle en C₁-C₆.

4. Composition pulvérulente en dispersion suivant la revendication 3, caractérisée en ce que l'on copolymérise comme composés du silicium, éthyléniquement insaturés, un ou plusieurs composés des formules générales
CH₂=CH(CH₂)₀₋₈-SiR³ₐ(OR⁴)₃₋ₐ, CH₂=CR⁵-CO₂-(CH₂)_{b}-SiR³ₐ-(OR⁴)₃₋ₐ, 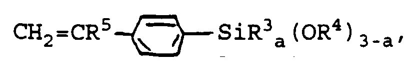 HS(CH₂)_{b}-SiR³ₐ-(OR⁴)₃₋ₐ, 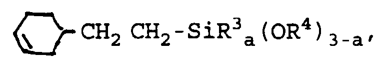 avec a = 0-2, b = 1-6, R³ = CH₃, C₆H₅, R⁴ = H, CH₃, C₂H₅, C₃H₇, C₆H₅, (CH₂)₂₋₃-O-(CH₂)₁₋₂H et R⁵ = H, CH₃.

5. Composition pulvérulente en dispersion suivant les revendications 1 à 4, caractérisée en ce que l'on réalise la polymérisation en émulsion en présence d'un ou de plusieurs composés organosiliciques dispersibles dans l'eau, avec un point d'ébullition >160°C (à pression normale), parmi le groupe des esters de l'acide silicique Si(OR')₄, des organoorganoxysilanes SiRₙ(OR')₄₋ₙ avec n = 1 à 3, des organosilanols SiRₙ(OH)₄₋ₙ avec n = 1 à 3, des polysilanes de formule générale R₃Si(SiR₂)ₙSiR₃ avec n = 0 à 500 et des di-, oligo- et polysiloxanes d'unités de formule générale R_{c}H_{d}Si(OR')ₑ(OH)_{f}O_{(4-c-d-e-f)/2} avec c = 0 à 3, d = 0 à 1, e = 0 à 3, f = 0 à 3 et la somme c+d+e+f est au maximum 3,5 par unité, où R' représente des radicaux alcoyle ou des radicaux alcoxyalcoylène identiques ou différents, avec 1 à 4 atomes C, de préférence méthyle ou éthyle, et R est identique ou différent et représente des radicaux alcoyle linéaires ou ramifiés avec 1 à 22 atomes C, des radicaux cycloalcoyle avec 3 à 10 atomes C, des radicaux aryle, aralcoyle, alcoylaryle avec 6 à 18 atomes C, où les radicaux R cités peuvent également être substitués par des halogènes comme F ou Cl, avec des groupes éther, thioéther, ester, amide, nitrile, hydroxyle, amine, carboxyle, acide sulfonique, anhydride carboxylique et carbonyle, où dans le cas des polysilanes, R peut également avoir la signification OR'.

6. Procédé de préparation de compositions pulvérulentes en dispersion suivant les revendications 1 à 5, au moyen de
a) une polymérisation en émulsion dans un récipient de réaction ouvert ou dans un récipient sous pression, dans un domaine de température de 0 à 100°C, alimentée de producteurs radicalaires au moins partiellement solubles dans l'eau, introduits habituellement pour la polymérisation en émulsion, où comme agent dispersant, on introduit des émulsionnants et/ou des colloïdes protecteurs, et la polymérisation est réalisée de manière continue ou discontinue, avec ou sans utilisation de germes, avec disposition de tous ou de constituants individuels du mélange réactionnel, ou par disposition partielle et addition suivante des ou de constituants du mélange réactionnel, ou d'après le procédé d'addition sans disposition, et
b) avant ou après le séchage par pulvérisation, on ajoute encore facultativement, un colloïde protecteur.

7. Procédé suivant la revendication 6, caractérisé en ce que le composé organosilicique non copolymérisable, dispersible dans l'eau est disposé seul ou en mélange ou n'est ajouté qu'au cours de la polymérisation, où l'addition est effectuée en solution dans un ou plusieurs des monomères organiques, ou séparément sous forme pure, ou sous forme d'une émulsion.

8. Procédé suivant la revendication 6 ou 7, caractérisé en ce que le monomère contenant du silicium, éthyléniquement insaturé est prédisposé ou n'est ajouté qu'au cours de la polymérisation, où l'addition est effectuée en solution, sous forme pure ou sous forme d'une émulsion.

9. Utilisation de compositions pulvérulentes en dispersion suivant les revendications 1 à 5, comme liant dans des produits chimiques de construction, en association avec des liants inorganiques, hydrauliques de prise comme le ciment, le plâtre, le silicate de potasse, pour la préparation de colles de construction, enduits, enduits de surface, enduits de sol, mortiers de joint et peintures.
